(19) Europäisches Patentamt
European Patent Office
Office européen des brevets

(11) Veröffentlichungsnummer: **0 337 084**
**A1**

(12) **EUROPÄISCHE PATENTANMELDUNG**

(21) Anmeldenummer: **89102947.2**

(22) Anmeldetag: **21.02.89**

(51) Int. Cl.[4]: **C08K 5/51 , C08L 27/06 , C08K 5/00 , //(C08K5/00,5:09, 5:51)**

(30) Priorität: **11.04.88 DE 3811959**

(43) Veröffentlichungstag der Anmeldung: **18.10.89 Patentblatt 89/42**

(84) Benannte Vertragsstaaten: **BE DE FR GB IT NL SE**

(71) Anmelder: **HÜLS AKTIENGESELLSCHAFT**
**Patentabteilung / PB 15 - Postfach 13 20**
**D-4370 Marl 1(DE)**

(72) Erfinder: **Hildebrand, Thomas, Dr.**
**Konradstrasse 28**
**D-4600 Dortmund 70(DE)**
Erfinder: **Kemper, Bruno, Dr.**
**Haardweg 4**
**D-4358 Haltern(DE)**

(54) **Stabilisatormischungen, Verwendung derselben und damit stabilisierte Formmassen und Formkörper.**

(57) Die bisher bekannten physiologisch einwandfreien Stabilisatorsysteme für thermoplastische Formmassen, vorzugsweise auf der Basis von Polymerisaten des Vinylchlorids, haben noch den Nachteil einer unzureichenden Anfangs- wie auch Endstabilität bei bestimmten Anwendungsgebieten.

Die erfindungsgemäßen Costabilisatoren auf Basis von Thiophosphit-Verbindungen werden neben physiologisch einwandfreien Primärstabilisatoren, wie Metallseifen, Salzen aromatischer Carbonsäuren oder Metallphenolaten erfolgreich eingesetzt.

Stabilisiert werden vorzugsweise Hart- und Weich-Polyvinylchlorid.

EP 0 337 084 A1

## Stabilisatormischungen, Verwendung derselben und damit stabilisierte Formmassen und Formkörper

Es ist bekannt, daß chloridhaltige Polymerisate durch die Einwirkung von Wärme, z. B. bei der Verarbeitung, leicht einen Abbau erleiden, der zu unerwünschten Verfärbungen und zu einer Beeinträchtigung der mechanischen Eigenschaften führt. Zur Vermeidung dieses Abbaus werden daher den Polymerisaten vor der Verarbeitung Stabilisatoren zugesetzt. Für Polyvinylchlorid und im wesentlichen Vinylchlorid enthaltende Mischpolymerisate verwendet man besonders Organozinnverbindungen, anorganische und organische Bleisalze, organische Antimonverbindungen oder Kombinationen aus Cadmium- und Bariumcarboxylaten. Diesen sogenannten Primärstabilisatoren werden häufig zur Verbesserung ihrer Wirksamkeit Costabilisatoren zugesetzt. Als Costabilisatoren bezeichnet man Substanzen, die allein kaum eine thermostabilisierende Wirkung besitzen, die aber in Kombination mit anderen Stabilisatoren bzw. Stabilisatorkomponenten zu einer Wirkungssteigerung hinsichtlich der Anfangsfarbe bzw. Endstabilität führen. Die Wirkungsweise von Primär-oder Costabilisatoren bzw. ihr Zusammenwirken (Synergismus) ist in der einschlägigen Literatur beschrieben, z. B. in der Publikation von L.I. Nass, "Heat Stabilizers", Kirk-Othmer Encyclopedia of Chemical Technology, Band 12, 3. Auflage, Seite 225, Verlag John Wiley and Sons, 1980.

Bevorzugte Costabilisatoren sind beispielsweise Epoxyverbindungen, Polyole, organische Phosphite, substituierte Dihydropyridine, 1,3-Diketone oder aber auch Kombinationen aus diesen Verbindungen. Das Anwachsen der Anwendungsgebiete von Hochpolymeren auf Basis von PVC führt zu immer höheren Qualitätsanforderungen. Es besteht daher ein großer Bedarf an synergistisch wirkenden Stabilisatorkombinationen, die auf ganz spezielle Erfordernisse abgestimmt werden können, wobei die Anfangs- wie auch die Endstabilität zusätzlich verbessert werden sollte.

Es wurde nun gefunden, daß thermoplastische Formmassen, vornehmlich Formmassen auf der Basis von Polymerisaten des Vinylchlorids, dann eine Thermostabilisierung in nicht vorhersehbarem Maße erhalten, wenn man Stabilisatormischungen verwendet, die als Costabilisator mindestens eine Verbindung der allgemeinen Formel I enthalten:

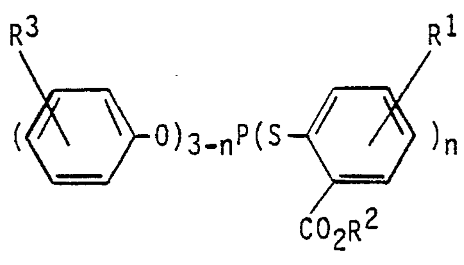

(I)

In dieser Formel stehen $R^1$ und $R^3$, die gleich oder verschieden sein können, für Wasserstoff, Halogen, eine geradkettige oder verzweigte Alkyl- oder Alkenylgruppe, eine Acyl- oder Alkoxygruppe bzw. einen ggf. substituierten Arylrest, wobei die organischen Reste jeweils bis zu 20 Kohlenstoffatomen haben und die Reste $R^1$ und $R^3$ auch mehrfach vorkommen können.

$R^2$ kann eine geradkettige oder verzweigte Alkyl- oder Alkenylgruppe sowie ein ggf. substituierter Arylrest, wiederum jeweils mit bis zu 20 Kohlenstoffatomen, sein.

n steht für eine Zahl von 1 bis 3.

Unabhängig voneinander können $R^1$, $R^2$ und $R^3$ für folgende Gruppen bzw. Reste stehen:

Methyl, Ethyl, Propyl, Isopropyl, Butyl, Isobutyl, Pentyl, Isopentyl, Hexyl, Isohexyl, Heptyl, Isoheptyl, Octyl, Isooctyl, Nonyl, Isonoyl, Decyl, Isodecyl, Dodecyl, Isododecyl, Tridecyl, Tetradecyl, Hexadecyl, Octadecyl, Arachinyl, Propenyl, Butenyl, Pentenyl, Hexenyl, Heptenyl, Octenyl, Nonenyl, Decenyl, Dedecenyl, Tetradecenyl, Hexadecenyl, Octadecenyl, Phenyl, o-, m-, p-Tolyl, p-tert.-Butylphenyl, p-Nonylphenyl, p-Dodecylphenyl, o-, m-, p-Hydroxyphenyl und o-, m-, p-Chlorphenyl.

Weiterhin können $R^1$ und $R^3$ Wasserstoff, Halogen, vorzugsweise Chlor, und eine Methoxy-, Ethoxy-, Propoxy-, Iso- propoxy-, Butoxy-, Iso butoxy-, Pentyloxy-, Isopentyloxy-, Hexyloxy-, Isohexyloxy-, Heptyloxy-, Isoheptyloxy-, Octyloxy-, Isooctyloxy-, Nonyloxy-, Isononyloxy-, Decyloxy-, Isodecyloxy-, Dedecyloxy-, Isododecyloxy-, Tridecyloxy-, Tetradecyloxy-, Hexadecyloxy-, Octadecyloxy- oder Arachinyloxygruppe bzw. eine Methyl-, Ethyl-, Propyl-, Isopropyl-, Butyl-, Isobutyl-, Pentyl-, Isopentyl-, Hexyl-, Isohexyl-, Heptyl-, Isoheptyl-, Octyl-, Isooctyl-, Nonyl-, Isononyl-, Decyl-, Isodecyl-, Dodecyl-, Isododecyl-, Tridecyl-, Tetradecyl-, Hexadecyl-, Octadecyl-, oder Arachinylcarbonylgruppe sein.

Die Costabilisatoren der Formel I können nach gängigen Methoden der organischen Chemie synthetisiert werden. Vorzugsweise werden sie durch basisch katalysierte Substitutionen von Thiosalicylsäureestern und substituierten Phenolen an Phosphortrihalogeniden (Halogen = Cl, Br) hergestellt.

Als Thiosalicylsäurederivate werden vorzugsweise der Methylester, Butylester oder 2-Ethylhexylester und als Phenol p-Kresol eingesetzt.

Der Formel I entsprechende Verbindungen können beispielsweise Substitutionsprodukte aus Phosphortrichlorid mit:
Phenol-, o-, m-, p-Kresol-, o-, m-, p-Chlorphenol, m-, p-Bromphenol, 3-Methoxyphenol, 4-Methoxyphenol, 3,4-Dimethoxyphenol, 3,5-Dimethoxyphenol, Thiosalicylsäuremethylester, Thiosalicylsäurebutylester, Thiosalicylsäure-2-ethylhexylester sein.

In den erfindungsgemäßen Stabilisatormischungen können als Primärstabilisatoren die üblichen Verbindungen eingesetzt werden, wie beispielsweise Metallseifen, Salze aromatischer Carbonsäuren und/oder Metallphenolate.

Als Metallseifen zu nennen sind vorzugsweise fettsaure Salze von Calcium, Barium oder Zink, die sich von Fettsäuren mit 8 bis 36, vorzugsweise 8 bis 22 Kohlenstoffatomen ableiten. Insbesondere kommen hier Caprylate, Caprinate, Laurylate, Myristate, Palmitate, Stearate und Behenate infrage. Ebenfalls einsetzbar sind vorzugsweise die Calcium, Barium- und Zinksalze verzweigter Fettsäuren wie 2-Ethylhexansäure, 2-Octyldecansäure oder Tetradecyloctandecansäure oder auch Hydroxyfettsäuren wie 9(10)-Hydroxystearinsäure oder 9,10-Dihydroxystearinsäure. Die Metallseifen können aus den Salzen einzelner Fettsäuren oder auch von Fettsäuregemischen, wie sie aus natürlichen Fetten gewonnen werden, bestehen. Als Salze aromatischer Carbonsäuren kommen besonders die Calcium-, Barium- und Zinksalze der Benzoesäure und der substituierten Benzoesäureester, insbesondere der alkylsubstituierten Benzoesäure, in Betracht. Als Phenolate lassen sich einsetzen: Methylphenolate, tert.-Butylphenolate, Nonylphenolate, Dodecylphenolate oder Naphtenate des Calciums, Bariums oder Zinks.

In der Regel enthalten die mit den erfindungsgemäßen Stabilisatormischungen versetzten thermoplastischen Formmassen auf 100 Gewichtsteile Polymerisat 0,02 bis 2, vorzugsweise 0,05 bis 0,5 Gewichtsteile Verbindungen der Formel I. Die Primärstabilisatoren können in Mengen von 0,05 bis 5, vorzusgsweise 0,1 bis 2 Gewichtsteilen pro 100 Gewichtsteile Polymerisat enthalten sein. Vorzugsweise enthalten die Formmassen auf 100 Teile Polymerisat 0,1 bis 3 Gewichtsteile Calciumseife und/oder 0,1 bis 3 Gewichtsteile Bariumseife und/oder 0,1 bis 3 Gewichtsteile Zinkseife. Beim vorzugsweisen Einsatz der Seifen von Fettsäuren mit 8 bis 22 Kohlenstoffatomen beträgt deren Gesamtmenge im allgemeinen nicht mehr als 3 Gewichtsteile pro 100 Gewichtsteile Polymerisat.

Wie bereits erwähnt, kommen als Polymerisate in erster Linie Homo- und Copolymerisate des Vinylchlorids in Betracht, wie sie nach bekannten Verfahren des Standes der Technik (Massen-, Suspension- oder Emulsionspolymerisation) hergestellt werden können /s. z. B. die Monographie von H. Kainer, Polyvinylchlorid und Vinylchlorid- Mischpolymerisate, Springer-Verlag (1965), Seiten 7 bis 59/. Die Mischpolymerisate des Vinylchlorids können bis zu 30 Gew.-% an Comonomeren, wie z. B. Vinylacetat, Vinylidenchlorid, Vinylether, Acrylnitril, Acrylsäureester, Maleinsäure-mono- oder diester oder Olefin enthalten. Es lassen sich auch Pfropfpolymerisate einsetzen, deren Herstellung z. B. in o. a. Monographie von Kainer auf den Seiten 111 bis 114 beschrieben wird.

Die Herstellung der stabilisierten thermoplastischen Formmassen kann durch übliche Methoden, z. B. durch einfaches mechanisches Vermischen der Komponenten in konventionellen Mischern erfolgen. Bei diesem Mischvorgang können weitere übliche Verarbeitungshilfsmittel eingearbeitet werden, wie z. B. Gleitmittel (Montanwachse oder Polyolpartialester), Weichmacher, Füllstoffe, Lichtstabilisatoren oder weitere Costabilisatoren wie z. B. epoxydierte Fettsäureester und Polyole.

Die homogene Verteilung der erfindungsgemäßen Stabilisatormischungen und ggf. weiterer Zusatzstoffe in Polymerisaten auf der Basis von Vinylchlorid kann z. B. mit Hilfe eines Zweiwalzenmischers bei 150 bis 200 °C erfolgen. Die stabilisierten PVC-Compounds können zu Formteilen verarbeitet werden, wie z. B. Fensterprofile, Stoßstangen, Armaturen, etc.

Die Erfindung wird anhand der nachfolgenden Beispiele näher erläutert.
Die Abkürzung GT steht dabei für Gewichtsteile.

Beispiel: Herstellung eines Costabilisators der Formel I (für n = 2)

58,9 g (0,28 Mol) Thiosalicylsäurebutylester (frisch destilliert), 15,1 g (0,14 Mol) p-Kresol (frisch destilliert) und 0,3 ml Pyridin wurden bei Raumtemperatur innerhalb von 50 Min. mit 19,6 g (0,14 Mol) 98prozentigem Phosphortrichlorid versetzt. Nach beendeter Zugabe erhitzte man die Reaktionsmischung

innerhalb von 1 h auf 100 °C und rührte 1,5 h bei dieser Temperatur. Zur Reinigung wurde die Lösung 2 h im Vakuum (ca. 0,7 - 0,3 mbar) bei 120 °C erhitzt und von flüchtigen Bestandteilen befreit. Den ausgefallenen Niederschlag des Rückstandes filtrierte man ab und erhielt 75,5 g eines gelben, viskosen Produktes, das nach $^1$H-NMR-Spektrum als Hauptbestandteil Bisthiophosphit enthielt.

Gef. S: 11,2 %; P: 5,3 %; Ber. S: 11,5 %; P: 5,6 %

Das gleiche Verfahren läßt sich unter ähnlichen Bedingungen auch auf die Substitution von Phosphortrichlorid mit anderen Thiosalicylsäureestern und Phenolen übertragen.

Herstellung und Prüfung der Walzfelle

Die Wirkung der Stabilisatorkombinationen wurde durch Bestimmung der statischen Thermostabilität von Walzfellen geprüft. Hierzu wurden die Stabilisatorkombinationen und ggf. Weichmacher und Verarbeitungshilfsmittel mit Polyvinylchlorid 30 sec. in einer Labormühle gemischt und anschließend auf einem Doppelwalzwerk bei einer Walztemperatur von 170 °C im Gleichlauf innerhalb von 5 Min. zu 1 mm starken Walzfellen verarbeitet. Aus den Walzfellen wurden Streifen der Dimension 14 x 250 mm geschnitten, die anschließend in einem speziellen Ofen (Metrastat Typ Sigma) bei 180 °C thermisch belastet wurden. Die Probestreifen wurden dabei kontinuierlich aus der Heizzone ausgefahren und zeigten durch die Farbveränderung die Wirkung der Stabilisatoren.

Aus folgenden Bestandteilen wurden Mischungen zusammengestellt
(GT = Gewichtsteile)

Mischung I:

- 100 GT Suspensions-Polyvinylchlorid (K WERT 70; VESTOLIT S 7054$^R$; Hüls AG, Marl)
- 30 GT Dioctylphthalat
- 0,5 GT Zinkstearat
- 1,0 GT Calciumstearat

Mischung II:

- 100 GT Suspensions-Polyvinylchlorid (K WERT 70; VESTOLIT S 7054; Hüls AG, Marl)
- 30 GT Dioctylphthalat
- 0,3 GT Zinkstearat
- 0,6 GT Bariumstearat

Zur Herstellung der erfindungsgemäßen Polyvinylchlorid-Formmassen wurden die Mischungen I und II mit folgenden Costabilisatoren getestet. Thiophosphit 1 = Hauptprodukt Monothiophosphit
Thiophosphit 2 = Hauptprodukt Dithiophosphit
Thiophosphit 3 = Hauptprodukt Trithiophosphit
(In den nachfolgenden Tabellen werden die Thiophosphite 1 bis 3 mit Thioph. abgekürzt)

Der jeweils entsprechende Verlauf der Verfärbung der Probestreifen während der thermischen Belastung ist abgeschätzt entsprechend der folgenden Skala:

| 0 | 1 | 2 | 3 | 4 | 5 | 6 | 7 | 8 | 9 | 10 |
|---|---|---|---|---|---|---|---|---|---|---|
| farblos | | | gelb | | | orange | | | schwarz | |

Tabelle 1

| Mischung I | | | | | | | | | | |
|---|---|---|---|---|---|---|---|---|---|---|
| Beispiel | Costabilisator (0,2 GT) | Belastung bei 180 °C in Min. | | | | | | | | |
| | | 10 | 20 | 30 | 40 | 50 | 60 | 65 | 70 | 80 |
| | | Farbe | | | | | | | | |
| - | - | 2 | 2 | 1 | 6 | 8 | 10 | 10 | 10 | 10 |
| 1 | Thioph. 3 | 0 | 0 | 0 | 0 | 1 | 10 | 10 | 10 | 10 |
| 2 | Thioph. 2 | 0 | 0 | 0 | 0 | 1 | 9 | 10 | 10 | 10 |
| 3 | Thioph. 1 | 0 | 0 | 0 | 1 | 2 | 9 | 10 | 10 | 10 |

Tabelle 2

| Mischung II | | | | | | | | | | |
|---|---|---|---|---|---|---|---|---|---|---|
| Beispiel | Costabilisator (0,2 GT) | Belastung bei 180 °C in Min. | | | | | | | | |
| | | 10 | 20 | 30 | 40 | 50 | 60 | 65 | 70 | 80 |
| | | Farbe | | | | | | | | |
| - | - | 2 | 2 | 1 | 6 | 10 | 10 | 10 | 10 | 10 |
| 4 | Thioph. 3 | 0 | 0 | 0 | 0 | 0 | 4 | 10 | 10 | 10 |
| 5 | Thioph. 2 | 0 | 0 | 0 | 0 | 0 | 2 | 2 | 10 | 10 |
| 6 | Thioph. 1 | 0 | 0 | 0 | 0 | 1 | 2 | 2 | 3 | 10 |

Es wurden folgende Vergleichsbeispiele mit handelsüblichen Costabilisatoren durchgeführt:

Tabelle 3

| Mischung I | | | | | | | | | | |
|---|---|---|---|---|---|---|---|---|---|---|
| Beispiel | Costabilisator (jeweils 0,2 GT) | Belastung bei 180 °C in Min. | | | | | | | | |
| | | 10 | 20 | 30 | 40 | 50 | 60 | 65 | 70 | 80 |
| | | Farbe | | | | | | | | |
| - | - | 2 | 2 | 1 | 6 | 8 | 10 | 10 | 10 | 10 |
| A | IRGASTAB$^R$ CH 300 | 2 | 2 | 2 | 1 | 5 | 7 | 10 | 10 | 10 |
| B | RHODIASTAB$^R$ | 0 | 0 | 0 | 2 | 10 | 10 | 10 | 10 | 10 |
| C | IRGASTAB CH 300 / RHODIASTAB | 0 | 0 | 0 | 0 | 0 | 9 | 10 | 10 | 10 |
| D | Thioph. 2 / RHODIASTAB | 0 | 0 | 0 | 0 | 2 | 9 | 10 | 10 | 10 |
| E | Thioph. 2 / IRGASTAB CH 300 | 0 | 0 | 0 | 0 | 1 | 9 | 10 | 10 | 10 |

Tabelle 4

| Mischung II | | | | | | | | | | |
|---|---|---|---|---|---|---|---|---|---|---|
| Beispiel | Costabilisator (jeweils 0,2 GT) | Belastung bei 180 °C in Min. | | | | | | | | |
| | | 10 | 20 | 30 | 40 | 50 | 60 | 65 | 70 | 80 |
| | | Farbe | | | | | | | | |
| - | - | 2 | 2 | 1 | 6 | 10 | 10 | 10 | 10 | 10 |
| F | IRGASTAB CH 300 | 1 | 1 | 3 | 3 | 3 | 1 | 1 | 10 | 10 |
| G | RHODIASTAB | 0 | 0 | 0 | 0 | 10 | 10 | 10 | 10 | 10 |
| H | IRGASTAB CH 300 / RHODIASTAB | 0 | 0 | 0 | 0 | 0 | 10 | 10 | 10 | 10 |
| I | Thioph. 2 / RHODIASTAB | 0 | 0 | 0 | 0 | 0 | 1 | 10 | 10 | 10 |
| J | Thioph. 2 / IRGASTAB CH 300 | 0 | 0 | 0 | 0 | 0 | 1 | 10 | 10 | 10 |

## Ansprüche

1. Stabilisatormischungen für thermoplastische Formmassen, die wenigstens einen Primärstabilisator und wenigsten einen Costabilisator enthalten,
dadurch gekennzeichnet,
daß der Costabilisator eine Verbindung der allgemeinen Formel

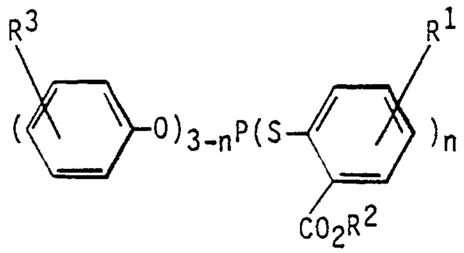

(I)

ist, in der $R^1$ und $R^3$ gleich oder verschieden sein können und für Wasserstoff, Halogen, eine geradkettige oder verzweigte Alkyl- oder Alkenylgruppe, eine Acyl- oder Alkoxygruppe bzw. einen ggf. substituierten Arylrest stehen, wobei die organischen Reste jeweils bis zu 20 Kohlenstoffatomen haben und die Reste $R^1$ und $R^3$ auch mehrfach vorkommen können.
$R^2$ eine geradkettige oder verzweigte Alkyl- oder Alkenylgruppe sowie ein ggf. substituierter Arylrest, wiederum jeweils mit bis zu 20 Kohlenstoffatomen, sein kann
und n für eine Zahl von 1 bis 3 steht.

2. Stabilisatormischungen nach Anspruch 1,
dadurch gekennzeichnet,
daß in der allgemeinen Formel I die aromatischen Kerne mehrfach substituiert sein können und die Reste $R^1$ und $R^3$ unabhängig voneinander Wasserstoff oder Methyl sind und $R^2$ für eine geradkettige oder verzweigte Alkylgruppe mit bis zu 8 Kohlenstoffatomen steht.

3. Stabilisatormischungen nach den Ansprüchen 2 und 3,
dadurch gekennzeichnet,
daß sie als Primärstabilisator wenigstens ein fettsaures Salz der Elemente Calcium, Barium oder Zink enthalten.

4. Verwendung der Stabilisatormischungen nach den Ansprüchen 1 bis 3 zur Stabilisierung von thermoplastischen Formmassen, insbesondere von solchen auf der Basis von Polymerisaten des Vinylchlorids.

5. Thermoplastische Formmassen, insbesondere solche auf der Basis von Polymerisaten des Vinylchlorids, enthaltend Stabilisatormischungen nach den Ansprüchen 1 bis 3.

6. Stabilisierte Formkörper auf der Basis von Thermoplasten, insbesondere auf der Basis von Polymerisaten des Vinylchlorids, enthaltend Stabilisatormischungen nach den Ansprüchen 1 bis 3.

Europäisches Patentamt

# EUROPÄISCHER RECHERCHENBERICHT

Nummer der Anmeldung

EP 89 10 2947

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 374 291 (H. MYERS)<br>* Anspruch 1; Beispiel 5; Spalte 1, Zeilen 41-45 *<br>--- | 1 | C 08 K 5/51<br>C 08 L 27/06<br>C 08 K 5/00 //<br>(C 08 K 5/00<br>C 08 K 5:09<br>C 08 K 5:51 ) |
| A | US-A-2 824 847 (J. FATH)<br>* Ansprüche; Spalte 3 *<br>----- | 1-6 | |

RECHERCHIERTE SACHGEBIETE (Int. Cl.4)

C 08 K
C 08 L

Der vorliegende Recherchenbericht wurde für alle Patentansprüche erstellt

| Recherchenort | Abschlußdatum der Recherche | Prüfer |
|---|---|---|
| DEN HAAG | 19-07-1989 | HOFFMANN K.W. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)